(19) Europäisches Patentamt
European Patent Office
Office européen des brevets

(11) **EP 3 239 647 A2**

(12) **EUROPEAN PATENT APPLICATION**

(43) Date of publication:
**01.11.2017 Bulletin 2017/44**

(51) Int Cl.:
***F41H 13/00*** *(2006.01)*    *F41H 11/02* *(2006.01)*

(21) Application number: **17168205.7**

(22) Date of filing: **26.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.04.2016 US 201615141581**

(71) Applicant: **Takehisa, Kiwamu
Kawasaki-shi, Kanagawa 211-0004 (JP)**

(72) Inventor: **Takehisa, Kiwamu
Kawasaki-shi, Kanagawa 211-0004 (JP)**

(74) Representative: **Pfenning, Meinig & Partner mbB
Patent- und Rechtsanwälte
Theresienhöhe 11a
80339 München (DE)**

(54) **LASER DEFENSE SYSTEM AND HIGH ALTITUDE AIRSHIP**

(57) A space based laser defense system according to the embodiment of the present invention, including a high-altitude airship (HAA). The high-altitude airship (HAA) includes a balloon filled with a lifting gas, and a focusing optics that focuses a laser beam from an outside of the high-altitude airship at a target. The laser beam may come to the high altitude airship from a space-based laser (SBL) that stays in a geostationary Earth orbit.

Fig. 1

**Description**

BACKGROUND OF THE INVENTION

1. Field of the Invention

The present invention relates to a laser defense system and a high altitude airship.

2. Description of Related Art

Use of a space-based laser (SBL) in a ballistic missile defense system in the future has been considered. One of the great advantages of using a high energy laser (HEL) directed energy weapon (DEW) to destroy a ballistic missile, which flies at the maximum speed of approximately Mach 20, is that a laser beam travels the faster than anything else at the speed of light. Another advantage is that a laser beam can travel in space for hundreds of kilometers since the laser beam is not absorbed or scattered.

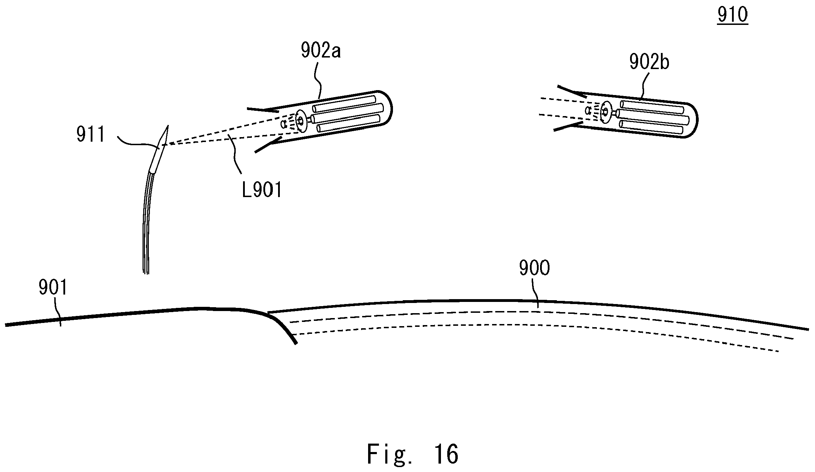

A conventional concept of an SBL defense system 910 is illustrated in Fig. 16. An SBL defense system 910 includes an SBL 902a and an SBL 902b. The SBL 902a generates a laser beam L901 which is focused at a ballistic missile 911. The SBL 902a and the SBL 902b stay at approximately a 500km altitude in low Earth orbit (LEO) to intercept and destroy the ballistic missile 911 in its boost phase. The ballistic missile 911 comes from an enemy territory 901 which is typically located near an ocean 900. It has been considered to use a Hydrogen Fluoride (HF) chemical laser oscillating at approximately 2.7um as a primary candidate laser for the SBL since the HF laser is a chemical laser that can operate without a large electric power supply. Also, it has already been demonstrated that the HF laser produces a megawatt-class high-power laser output. In order to achieve a global coverage, it is estimated that a total of approximately 20 SBLs are necessary.

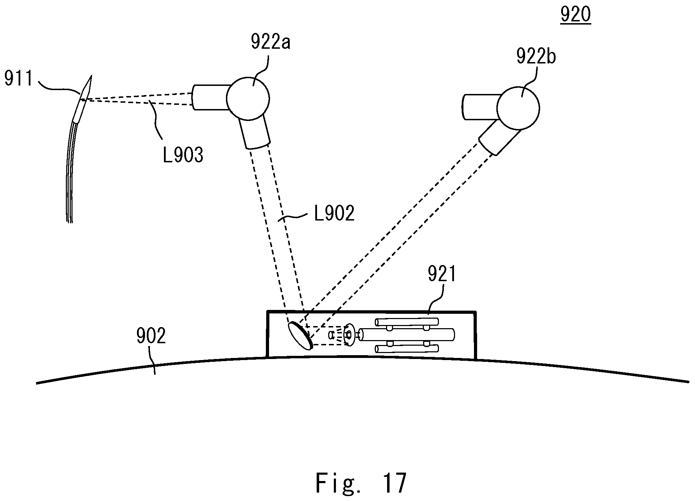

There is another concept of the SBL defense system which includes a ground-based laser (GBL) and relay mirror satellites (RMSs). Hereinafter, this system is referred to as a GBL and RMS defense system. As shown in Fig. 17, in a GBL and RMS defense system 920, a laser beam L902 extracted from a GBL 921 propagates to a RMS 922a. The RMS 922a reflects the incoming laser beam L902, and focuses it, as the laser beam L903, at a ballistic missile 911. The advantage of the GBL and RMS defense system 920 is that it is sufficient to employ only a single GBL 921 in the GMS and RMS defense system 920. This is because a very high power laser, which is quite large and heavy, is not difficult to develop and build on Earth. Also, recycling the chemicals and/or the maintenance of the laser is easy compared with the case of the above conventional concept of the SBL defense system.

These concepts of the space defense systems are explained in literature such as: Jim F. Riker, "An Overview of the Space-based Laser (SBL) Program," Proceedings of SPIE Vol. 4632, pp.181-186 (2002), Michael J. Stephens, "Harnessing Light: Laser/Satellite Relay Mirror Systems and Deterrence in 2035," Air War College, Air University (2010) and Charles B. Stevens, "Alpha: the first space-based defense," EIR Vol. 15, No. 11, March 11 (1988).

SUMMARY OF THE INVENTION

The main problem of the conventional SBL defense system is that many SBLs are necessary to destroy even a ballistic missile which comes from a launching site which had been predicted since an SBL needs to always be orbiting Earth. Therefore, even if a potential enemy country is very small, many SBLs are necessary to intercept the ballistic missiles coming from there.

On the other hand, the main problem of the GBL and RMS defense system is simply caused by using a GBL. That is, since the laser beam extracted from a GBL propagates through the air, the laser beam is affected by absorption, scattering and thermal blooming. Therefore, not only is the laser power decreased, but it is also necessary to provide an adaptive mirror, which can correct the deformed wavefront of the beam, in all the RMSs. Consequently, the whole system becomes complicated. Moreover, a GBL should preferably be located at a special limited place where the weather is always clear.

The present invention is related to a laser defense system including a high altitude airship (HAA). The high altitude airship includes a balloon filled with a lifting gas, and a focusing optics that focuses a laser beam from outside of the high-altitude airship at a target.

The HAA can stay close to a known launching site or a submarine which launches a target missile. Therefore, the HAA can surely intercept and destroy the target missile. The HAA is explained in the following literature for example:

Lewis Jamison, et al., "High-Altitude Airships for the Future Force Army," Published by RAND Corporation (2005).

The above and other objects, features and advantages of the present invention will become more fully understood from the detailed description given hereinbelow and the accompanying drawings which are given by way of illustration only, and thus are not to be considered as limiting the present invention.

BRIEF DESCRIPTION OF THE DRAWINGS

Fig. 1 is a concept drawing of a space-based laser defense system 1;
Fig. 2 is a graph showing air pressure as a function of altitude;

Fig. 3 is a table showing calculated spot diameters in the target missile;

Fig. 4 is a perspective view for explaining focusing of a laser beam by a spherical concave mirror;

Fig. 5 shows a side-view and a bottom view of the focusing mirror 108 in the HAA 105;

Fig. 6 is a perspective view of the bend mirror 107 in the HAA 105;

Fig. 7 is a cross-sectional side-view drawing of focusing optics used for the HAA 105;

Fig. 8 is a cross-sectional side-view drawing of focusing optics used for the HAA 105;

Fig. 9 is a cross-section side-view drawing of a general CW chemical laser;

Fig. 10 is a cross-section side-view drawing of a general pulsed chemical laser;

Fig. 11 is a cross-section side-view drawing of a general pulsed chemical laser;

Fig. 12 is a cross-section side-view drawing of a general pulsed chemical laser;

Fig. 13 is a cross-section side-view drawing of a pulsed chemical laser;

Fig. 14 is a cross-section side-view drawing of a pulsed chemical laser;

Fig. 15 is a concept drawing of a space-based defense system 2;

Fig. 16 is a concept drawing of a conventional SBL defense system 910; and

Fig. 17 is a concept drawing of a conventional GBL and RMS defense system 920;

DESCRIPTION OF THE EXEMPLARY EMBODIMENTS

Exemplary embodiments of the present invention are explained with reference to the attached drawings. The exemplary embodiments explained below are only examples of the present invention, and the present invention is not limited to these exemplary embodiments. Note that components denoted by the same reference numerals in the specification and drawings indicate the same components.

First embodiment

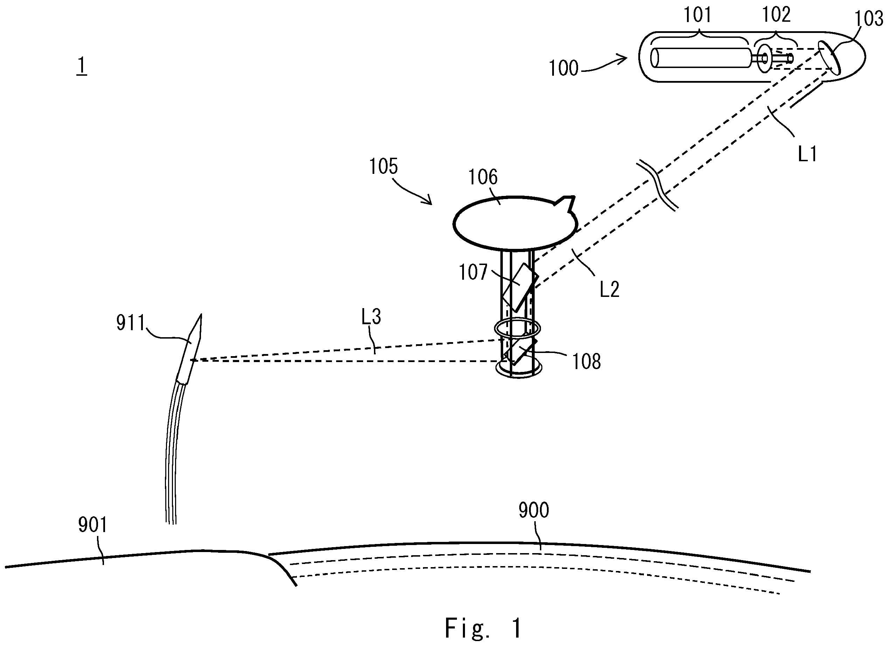

Hereinafter, the first embodiment according to the present invention is described based on Fig. 1. Fig. 1 is a concept drawing of the space-based laser defense system 1. The SBL defense system 1 includes an SBL (Space Based Laser) 100 and an HAA (High Altitude Airplane) 105. The SBL 100 has a pulsed chemical oxygen-iodine laser (COIL) 101, a beam expander 102 and a steering mirror 103.

The SBL 100 stays in GEO at an altitude of 35,786km. The pulsed COIL 101 has an oscillator and an amplifier, which are not shown in Fig. 1. The pulsed COIL 101 has a MOPA (Master Oscillator and Power Amplifier) system which is widely used for various lasers in order to produce a high-quality and high-power laser beam. Therefore, the pulsed COIL 101 produces a diffraction-limited high-quality 1.315um-wavelength laser beam. The beam expander 102 expands an extracted laser beam L1 to be an approximately 6m diameter beam. The expanded laser beam L1 is reflected by the steering mirror 103, and propagates toward the HAA 105. The HAA 105 is floated by a large balloon 106. A photovoltaic solar cell (not shown) may be mounted on the balloon 106. The large balloon 106 is filled with a lifting gas such as hydrogen. The HAA 105 stays at an altitude of approximately 23km. The HAA 105 stays at a lower altitude than that of the SBL 100. The HAA 105 stays at a higher altitude than that of jet stream. The HAA 105 is an unmanned airship, and thus is controlled from a remote ground station by a wireless communication.

In this embodiment, since the HAA 105 is located at the latitude of 38 degrees, and is located at the same longitude as that of the SBL 100, the distance from the SBL 100 to the HAA 105 is approximately 36,000km. Therefore, the diameter d of a laser beam L2 at the HAA 105 becomes approximately 10m, which is calculated by the following formula.

$$d = 4\,M^2\,\lambda\,f/\pi D$$

$M^2$ is a beam quality parameter which is approximately 1.0 since the laser beam L1 is a diffraction-limited beam, $\lambda$ is the laser wavelength which is 1.315um, f is the focal length which is 36,000km, and D is the initial beam diameter which is approximately 6m.

The HAA 105 carries a focusing optics which includes a large rectangular bend mirror 107 and a large rectangular focusing mirror 108. The incoming laser beam L2 is incident on the bend mirror 107. The bend mirror 107 reflects the laser beam L2 toward the focusing mirror 108. The focusing mirror 108 reflects and focuses a laser beam L3 at a ballistic missile 911. The ballistic missile 911 is launched from a missile site in an enemy territory 901. The missile site is located near ocean 900. The focused spot diameter of the laser beam L3 at the ballistic missile 911 becomes approximately 1.7cm when a distance from the HAA 105 to the ballistic missile 911 is 100km. Therefore, if the energy of the laser beam L3 is approximately 23kJ, the irradiation fluence at the ballistic missile 911 becomes approximately 10kJ/cm$^2$, which is high enough to damage a metal housing of the ballistic missile 911.

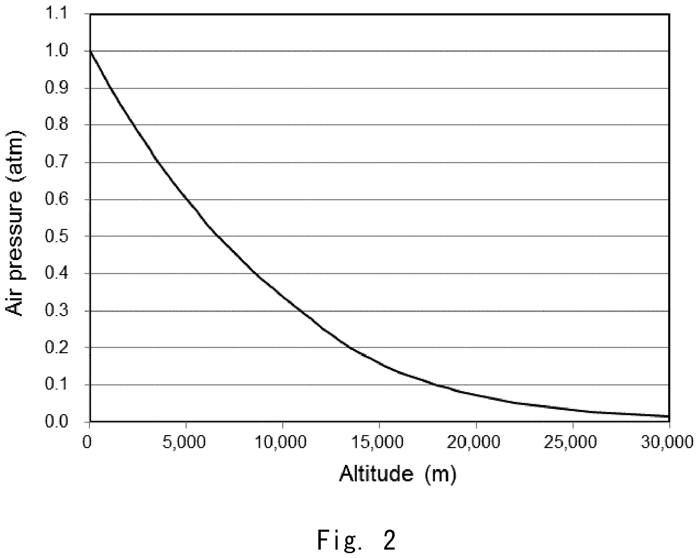

The HAA 105 which the SBL defense system 1 uses can stay at the altitude of 20 to 30km. If the altitude is higher than 18km, the air pressure is less than 0.1 atm. (see Fig. 2). Therefore, the effect of the thermal blooming and that of the absorption, by which the laser beam from the HAA is affected, are less than 1/10 of those on a ground surface of Earth. In this embodiment, since the HAA 105 stays at the altitude of approximately 23km, the effect of the thermal blooming and that of the absorption are less than 1/20 of those on a ground surface of the Earth.

A pulsed COIL as a HEL DEW is explained, for example, in the following literature.

K. Takehisa, "Considerations of a ship defense with a pulsed COIL," Proceedings of SPIE Vol. 9650, 965003 (2015).

Since the HAA 105 can always stay near the enemy territory 901, only a single HAA and a single SBL are necessary to monitor the enemy's missile launching, and to intercept and destroy the ballistic missiles 911. This is the main advantage of the SBL defense system 1 according to the first embodiment.

Another advantage of the SBL defense system 1 according to the first embodiment is that the focused beam size at the target becomes small enough to damage the ballistic missile 911 with a laser energy of only several tens of kJ. This is realized by using the large focusing mirror 108 since the diameter of the incoming laser beam L2 increases during the long propagation of approximately 36,000km.

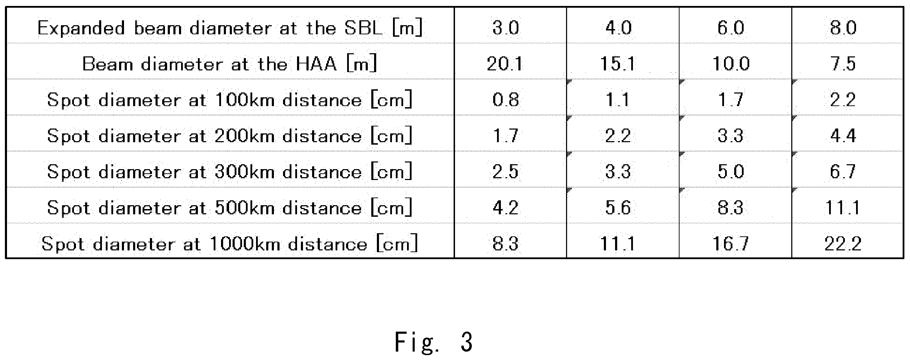

The laser energy required for the SBL 100 depends on the beam spot diameter at the target ballistic missile 911. Since the spot diameter depends on the expanded beam diameter at the SBL 100, and also depends on the distance from the HAA to the target, it is calculated with a parameter of the expanded beam diameter at the SBL. The calculated values are listed in Fig. 3. A table described in Fig. 3 indicates that the larger the beam diameter at the SBL 100 is, the smaller the mirror at the HAA is. Furthermore, the table described in Fig. 3 indicates that the smaller the diameter beam at the HAA 105 is, the larger the spot diameter at the target ballistic missile 911 is. Therefore, in order to design the SBL defense system 1, the maximum obtainable size for the mirrors 107 and 108 at the HAA 105 is an important design parameter.

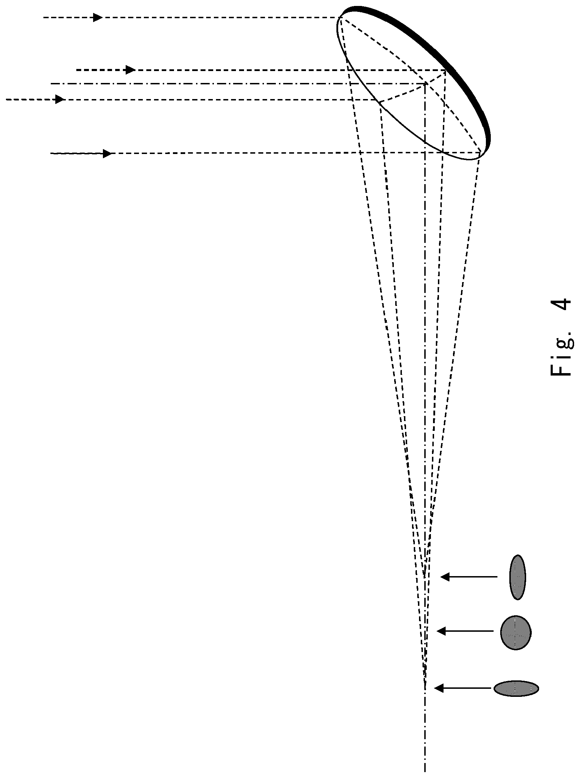

Since the mirror 108 bends the laser beam L2 by approximately 90 degrees, the focusing mirror 108 has a concave toroidal surface in order to reduce the spot size at the focus point for the focused laser beam L3. Therefore, the radius of curvature in the vertical direction is different from that in the horizontal direction. If, instead of using the concave torodial mirror for the focusing mirror 108, a spherical concave mirror is used for the focusing mirror 108, the laser beam cannot be tightly focused due to a generation of a large astigmatism as shown in Fig. 4.

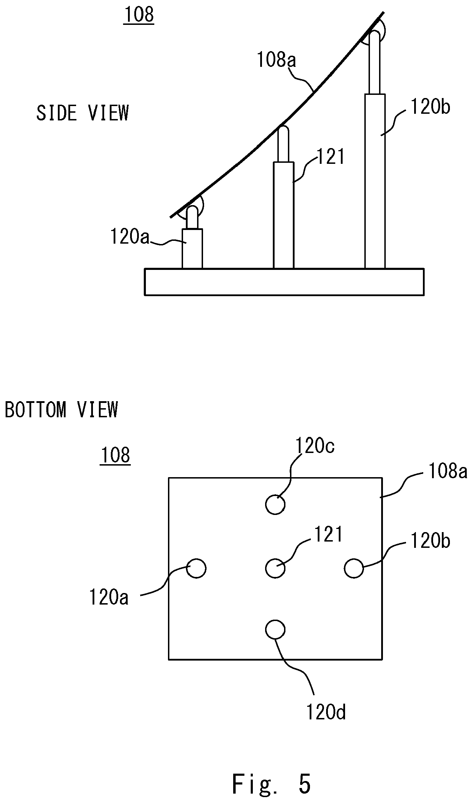

In order to form the toroidal surface, the focusing mirror 108 is made of a thin flat plate which is deformed by gravity. The side view and bottom view of the focusing mirror 108 are illustrated in Fig. 5. The focusing mirror 108 includes a plurality of adjustable pillars 120a to 120d and a mirror plate 108a. The mirror plate 108a is deformed by gravity. The mirror plate 108a has a rectangular shape. A back surface of the mirror plate 108 is supported by the plurality of adjustable pillars. In Fig. 5, four adjustable pillars 120a, 120b, 120c and 120d support the mirror plate 108a from the back surface of the mirror plate 108a. The adjustable pillar 120a and the adjustable pillar 120b are symmetrically placed in a horizontal direction with regard to the bottom view. The adjustable pillar 120c and the adjustable pillar 120d are symmetrically placed in a vertical direction with regard to the bottom view. Since the mirror plate 108a is a thin plate, the surface of the focusing mirror 108 can be deformed a little due to gravity force. However, the deformed surface shape can be controlled to be concave toroidal by adjusting the lengths of the four pillars 120a, 120b, 120c and 120d. There is another pillar 121 which can push in the center of the focusing mirror 108. The pillar 121 can also adjust the surface shape of the focusing mirror 108. One of the suitable materials for the mirror plate 108a is aluminum. A plastic plate which has a high-reflective coated front surface can also be used for the mirror plate 108a since the plastic plate is light in weight. A conventional deformable mirror using many actuators can also be used for the focusing mirror 108.

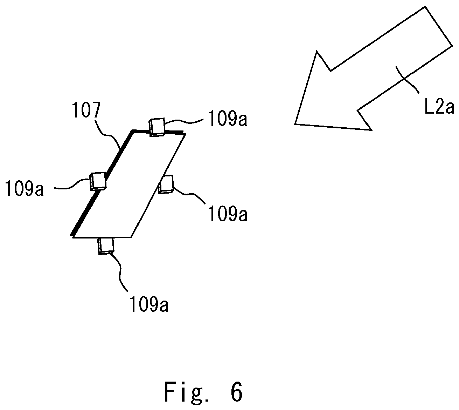

One of the difficulties for the SBL defense system 1 is the requirement for a precise control of the steering mirror 103 since the propagation length of the laser beam L1 is quite long. Therefore, around the bend mirror 107 of the HAA 105, a plurality of photo detectors 109a, 109b, 109c and 109d are mounted as shown in Fig. 6. In Fig. 6, the four photo detectors 109a, 109b, 109c and 109d are placed near the bend mirror 107. An incoming alignment laser beam L2a from the SBL 100 can be detected by at least one of these photo detectors 109a, 109b, 109c and 109d. The alignment laser beam L2a is also provided by the pulsed COIL 101. However, the output energy of the alignment laser beam L2a is much smaller than that of the laser beam L2. The alignment laser beam L2a is generated by operating only the oscillator of the pulsed COIL 101. That is, the power amplifier of MOPA is not used for generating the alignment laser beam L2a. By measuring the laser power of the alignment laser beam L2a at each photo detector 109a, 109b, 109c and 109d, the incoming position of the alignment laser beam L2a can be detected. When the axis of the alignment laser beam L2a is adjusted to come to the center of the bend mirror 107, the power measured by each of the photo detectors 109a, 109b, 109c and 109d is almost zero. Therefore, the steering mirror 103 is controlled so as to keep each detected powers at zero level.

Instead of the pulsed COIL 101, a different laser can be used for the alignment. However, since complete collinearity is required between the laser beam L2a from the alignment laser and the laser beam L2 from the pulsed COIL 101, using the pulsed COIL 101 also for the alignment makes the alignment system simple.

Another advantage of the first embodiment is that using the HAA 105 to carry the focusing optics is less expensive than using a satellite, which needs an expensive launching vehicle. Though a typical HAA may not be able to carry heavy mirrors, it can carry large mirrors as long as the total weight is within the payload. On the other hand, a satellite has a size limited by a payload space of the launching vehicle.

Meanwhile, the HAA 105 of the first embodiment may be subject to an enemy's attack by a surface to air missile. However, the SBL staying in GEO is high enough to escape from an attack by any kind of missile such as an anti-satellite multistage missile. This is advantageous, since the SBL is much more expensive and complicated than the HAA, and thus if it were destroyed, the effect of its loss would be greater than that of the HAA.

Second embodiment

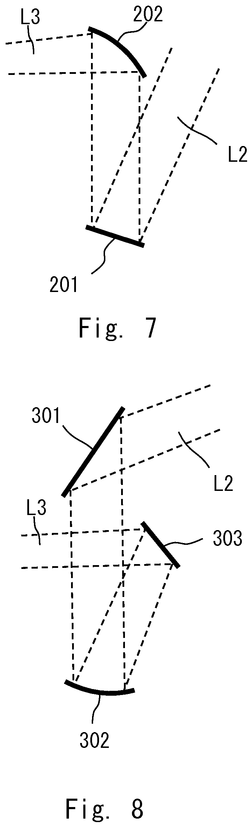

Hereinafter, the second embodiment is explained with reference to Fig. 7. In the second embodiment, the focusing optics used in the HAA 105 is different from that of the first embodiment. Therefore, a description other than that of the focusing optics is omitted.

The second embodiment is used in case the HAA 105 is located near the equator. The bottom of the HAA 105 is equipped with a bend mirror 201 since the incoming laser beam L2 has a high elevation angle. The bend mirror 201 reflects the laser beam upward. The laser beam reflected by the bend mirror 201 enters the focusing mirror 202. The focusing mirror 202 focuses the laser beam L3. Then, the focusing laser beam L3 comes to the ballistic missile 911.

Third embodiment

Hereinafter, the third embodiment is explained with reference to Fig. 8. In the third embodiment, the focusing optics used in the HAA 105 is different from that of the first embodiment. Therefore, a description other than that of the focusing optics is omitted.

The incoming laser beam L2 from the SBL 100 is reflected by the bend mirror 301. The incoming laser beam L2 is reflected by a concave mirror 302 and a steering mirror 303. Then, the laser beam L3 comes to the ballistic missile 911. The advantage of the third embodiment is that the concave mirror 302 can be a concave spherical surface. Especially, if the concave mirror 302 is made of a circular thin plate, the concave shape can be automatically formed by gravity force. However, since the concave mirror 302 is used non-coaxially, a little astigmatism may be generated.

Although the SBL 100 uses a pulsed COIL 101 in the first to third embodiments, other pulsed chemical lasers such as a chemical oxygen laser (COL) or a pulsed HF laser can be used instead. Pulsed chemical lasers are more suitable than a continuous wave (CW) chemical laser for the present invention because precise pointing control is required for the laser beam L1. A CW chemical laser generally needs to pump out reacted gases to an outside space continuously during the lasing, which generates a counterforce to the SBL. Therefore, stabilization of the beam pointing is affected. On the other hand, a pulsed chemical laser can stop pumping out of reacted gases during the pulsed oscillation. This is because the laser cavity can be pumped out before the laser oscillation, and the reacted gases can be pumped out from the laser cavity after the pulsed oscillation. Therefore, during the pulsed oscillation, the generation of the counterforce can be avoided.

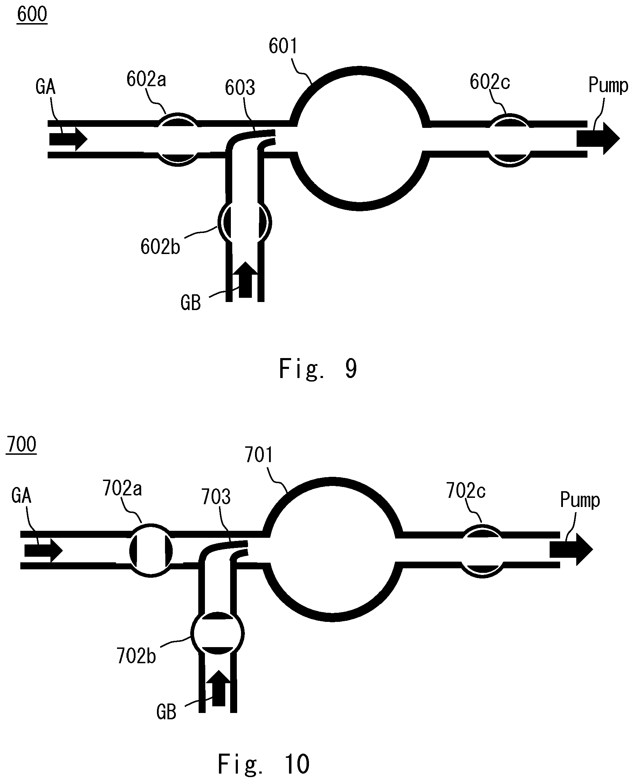

The difference between a CW chemical laser and a pulsed chemical laser is explained with reference to Figs. 9 to 12. Figs. 9 to 12 illustrate a cross-sectional view of general chemical lasers. Generally, the chemical laser can oscillate by mixing two kinds of gases. In Fig. 9, a CW chemical laser 600 during the laser oscillation is shown. A gas GA flows through the valve 602a, and a gas GB flows through the valve 602b. After the gas GB flows out from a nozzle 603, the two gases GA and GB are mixed. Then, the gases GA and GB pass through a laser cavity 601 to produce laser oscillation. The reacted gases GA and GB are pumped out through a valve 602c. Therefore, during the laser oscillation, all the valves, that is the valves 602a, 602b and a valve 602c, open. In the case of an SBL, the reacted gases GA and GB are pumped out into space. Therefore, a counterforce is generated by pumping out the reacted gases GA and GB. The counterforce causes unpredictable vibration and affects the laser pointing stability.

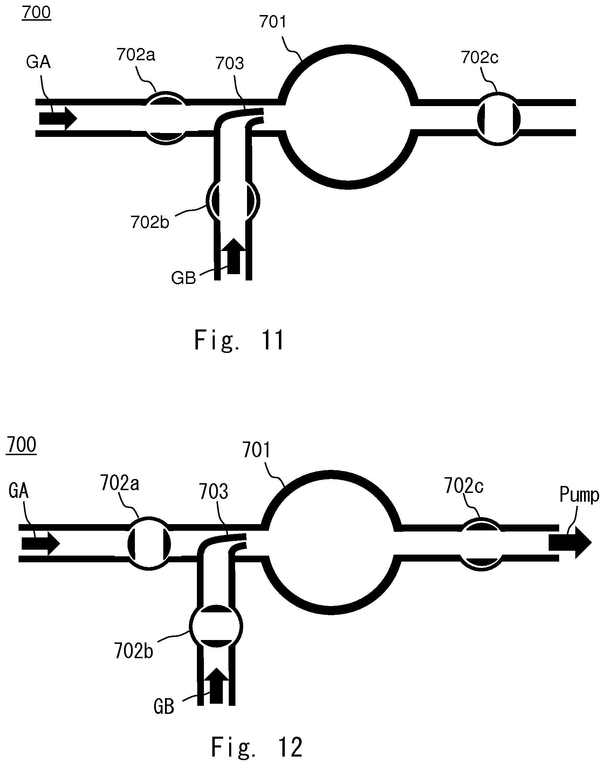

On the other hand, in a pulsed chemical laser 700 as shown in Fig. 10, the valve 702c opens before the laser operation. The inside of the laser cavity 701 is pumped out before the laser operation. To start a pulsed oscillation, the valve 702a and the 702b open and the valve 702c closes as shown in Fig. 11. The gas GA flows through the valve 702a and the gas GB flows through the valve 702b. After the gas GB flows out from the nozzle 703, the two gases GA and GB are mixed. The laser cavity 701 is filled with the gases GA and GB. Since the valve 702c is closed, the total pressure in the laser cavity 701 increases. Then, a laser pulse oscillates when the pressure of the laser cavity 701 reaches a threshold value. When the pulsed oscillation ends, the valves 702a and 702b are closed and the valve 702c is opened as shown in Fig. 12. Then, the reacted gases GA and GB which the laser cavity 701 is filled with are pumped out into space. Therefore, pumping out does not affect the laser pointing stability.

In the case of a HF chemical laser, GA is hydrogen, and GB is fluorine. In the case of a COIL, GA is singlet oxygen ($O_2(^1\Delta_g)$), and GB is iodine. In the case of a COL, GA is singlet oxygen ($O_2(^1\Delta_g)$), and GB is not necessary.

A COL as a HEL DEW is explained, for example, in the following literature. K. Takehisa, "Proposal of a defense application for a chemical oxygen laser," Proceedings of SPIE Vol. 9466, 94660W (2015).

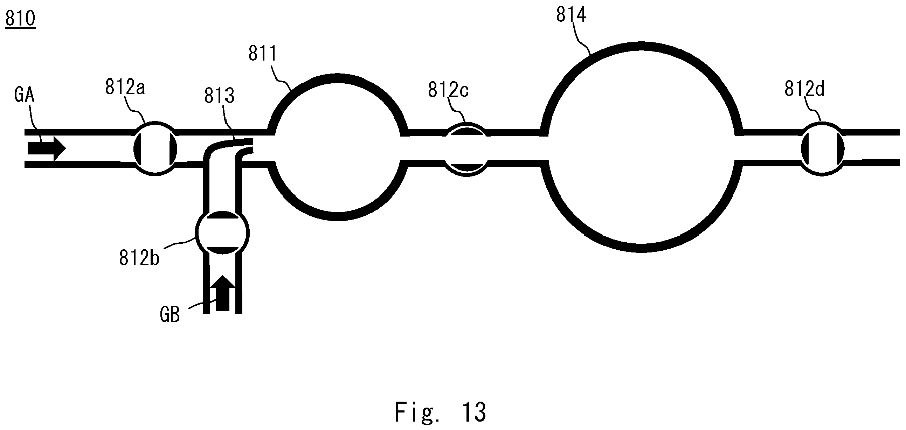

Another configuration of a pulsed chemical laser 810, which can also be used in the present invention, is shown in Fig. 13. A unique feature of the pulsed chemical laser 810 is that it is equipped with a large exhaust chamber 814. The pulsed chemical laser 810 during the pulsed operation is shown in Fig. 13. As shown in Fig.

13, a valve 812d is placed between the exhaust chamber 814 and outside space. A valve 812c is placed between a laser cavity 811 and the exhaust chamber 814. The exhaust chamber 814 is larger than the laser cavity 811.

The gas GA flows through the valve 812a, and the gas GB flows through the valve 812b. After the gas GB flows out from a nozzle 813, the two gases GA and GB are mixed. The laser cavity 811 is filled with the gases GA and GB. Since the valve 802c is closed, the total pressure in the laser cavity 811 increases. Then, a laser pulse oscillates when the pressure of the laser cavity 811 reaches a threshold value.

The valve 812c is opened and the valve 812d is closed during the pulsed operation. Therefore, the reacted gases GA and GB can flow into the exhaust chamber 814. But the reacted gases GA and GB are not pumped out of the exhaust chamber 814 to the outside since the valve 812d is closed. Therefore, during the pulsed oscillation, the generation of the counterforce can be avoided. The laser pointing stability is thus not affected during the laser oscillation.

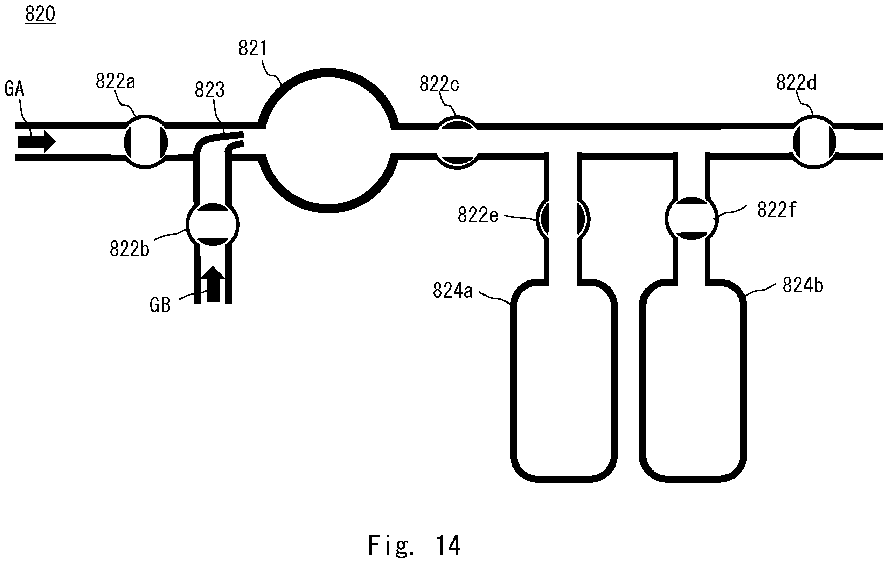

Still another configuration of a pulsed chemical laser, which can also be used in the present invention, is shown in Fig. 14. A unique feature of a pulsed chemical laser 820 is that it is equipped with two cryosorption vacuum pump 824a and 824b. The cryosorption vacuum pump 824a and 824b adsorb the reacted gases. A valve 822a, a valve 822b and a laser cavity 821 correspond to the valve 702a, the valve 702b and the laser cavity 701 in Fig. 10, respectively. Therefore, the descriptions of the valve 822a, the valve 822b and the laser cavity 821 are omitted.

The pulsed chemical laser 820 during the pulsed operation is shown in Fig. 14. The cryosorption vacuum pump 824a is connected to the laser cavity 821 through a valve 822e and a valve 822c. The cryosorption vacuum pump 824a is connected to an outside space through the valve 822e and a valve 822d. The cryosorption vacuum pump 824b is connected to the laser cavity 821 through a valve 822f and the valve 822c. The cryosorption vacuum pump 824b is connected to the outside space through the valve 822f and the valve 822d.

The valve 822c is opened and the valve 822d is closed. Between the valve 822c and the valve 822d, a cryosorption vacuum pump 824a and a cryosorption vacuum pump 824b are connected with a valve 822e and a valve 822f, respectively. First the valve 822e opens, and the cryosorption vacuum pump 824a absorbs the reacted gases. When an adsorption ability of the cryosorption vacuum pump 824a decreases to a predetermined level, the valve 822e is closed, and the valve 822f is opened. Then, the cryosorption vacuum pump 824b absorbs the reacted gases. Therefore, the pulsed chemical laser 820 can provide a long pulsed operation without pumping out the reacted gases to the outside. Note that three or more cryosorption vacuum pumps are connected to the laser cavity 821.

If the pulsed chemical laser 820 is a COIL, in the cryosorption vacuum pump 824a and the cryosorption vacuum pump 824b, zeolite is typically used to adsorb the reacted gases such as oxygen, iodine and buffer gas. A COIL using a cryosorption vacuum pump is explained in the following literature:

John Vetrovec, "Chemical Oxygen-Iodine Laser with a Cryosorption Vacuum Pump," Proceedings of SPIE Vol. 3931, 60-70 (2000),

XIA Liang-zhi, et al., "Investigation of Cryosorption Vacuum System and Operation Process for COIL," Proceedings of SPIE, Vol. 6346, 634630 (2007), and Mingxiu Xu, et al, "Chemical oxygen-iodine laser with a cryosorption vacuum with different buffer gases," Proceedings of SPIE, Vol.9255, 925527 (2015).

Fourth embodiment

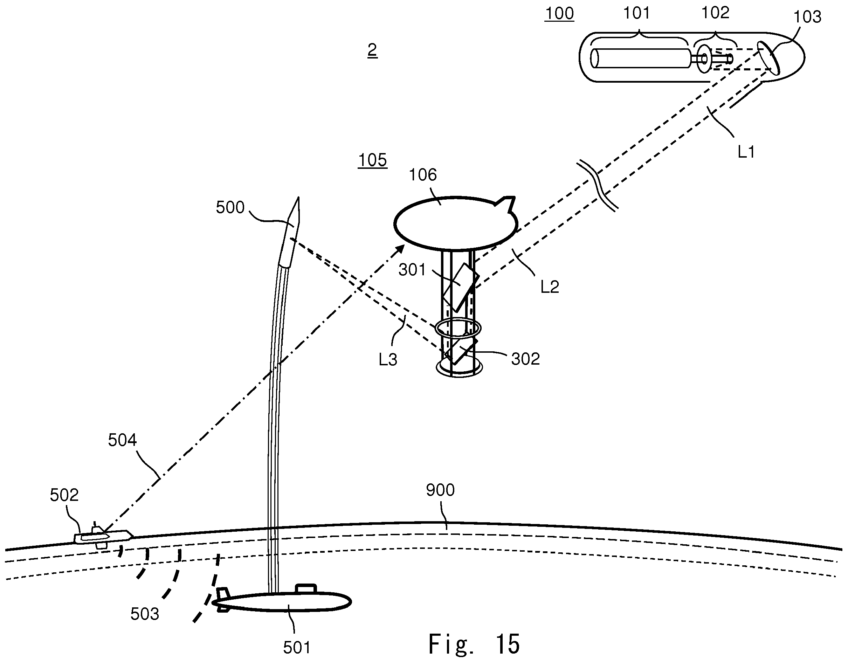

Hereinafter, a fourth embodiment of the present invention is explained with reference to Fig. 15. A space-based defense system 2 according to the fourth embodiment includes an SBL 100 and an HAA 105. The SBL 100 and the HAA 105 have basically the same configurations as those of the SBL and the HAA 105 described in the first embodiment. Therefore, the detailed descriptions of the SBL 100 and the HAA 105 of the fourth embodiment are omitted.

The space-based defense system 2 is used to intercept a submarine-launched ballistic missile (SLBM) 500 which is launched from an enemy's submarine 501. The laser beam L2 coming from the SBL 100 to the HAA 105 is reflected by the bend mirror 301. And the laser beam L2 is reflected by a concave mirror 302. Then, the laser beam L3 comes to the SLBM 500. In this embodiment, an unmanned vessel 502 searches for the submarine 501 by using sonar 503. When the unmanned vessel 502 detects a location of the submarine 501, the unmanned vessel 502 outputs a signal 504 to the HAA 105. The signal 504 includes information on the location of the SLBM 500 or the submarine 501. The HAA 105 is controlled based on the signal 504. The unmanned vessel 502 tracks the submarine 501 and continuously output the signal 504 to the HAA 105. Accordingly, the HAA 105 can always stay close to the submarine 501. That is, the HAA 105 tracks the submarine 501 based on the signal 504.

The advantage of this embodiment is that the HAA 105 can stay close to the submarine 501 once the unmanned vessel 502 detects the location of the submarine 501. Therefore, the propagation distance of the laser beam L3 can be less than 10km. Accordingly, a tight focusing of the beam can be achieved at the SLBM 500. Therefore, the SLBM 500 can be destroyed with the low energy laser beam L3, for example, energy of a few kilojoule.

Since the detection and the tracking of the SLBM 500 can be done by the unmanned vessel 502, the unmanned vessel 502 can stay close to the submarine 501 for a long time. Whereas, it is difficult for a manned vessel to stay close to a submarine for a long time since the manned vessel must frequently stop at a port.

In the fourth embodiment, the space-based defense system 2 includes, instead of the SBL 100, a satellite staying at LEO or GEO. That is, the satellite, which travels in LEO or GEO, has the pulsed COIL 101, the beam expander 102 and the steering mirror 103 and outputs the laser beam L2 to the HAA 105. Therefore, in this configuration, the same advantages as those described with regard to the above embodiments are achieved.

Alternatively, the pulsed COIL 101, the beam expander 102 and the steering mirror 103 are placed in another HAA. In this configuration, the space-based defense system 2 includes at least two HAA, one of which includes the pulsed COIL 101, the beam expander 102 and the steering mirror 103, the other of which includes a focusing optics such as a concave mirror 302 and so on. In this configuration, the same advantages as those of the above embodiments are achieved.

In the above embodiments, the space-based defense systems 1 and 2 include the HAA 105. The HAA 105 includes a balloon filled with a lifting gas, and a focusing optics that focuses a laser beam from outside of the high-altitude airship at a target. Therefore, the HAA can stay close to the known launching site in the enemy territory 900 or submarine 501. The laser beam from the space-based laser that stays in a geostationary Earth orbit may come to the HAA 105. Alternatively, the laser beam from the space-based laser that stays in LEO or another place may come to the HAA 105.

While the invention has been particularly shown and described with reference to exemplary embodiments thereof, the invention includes various changes which do not negatively affect the purpose and benefits of the invention and is not limited to these exemplary embodiments.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Claims**

1. A laser defense system including a high- altitude airship, the high-altitude airship comprising;
   a balloon filled with a lifting gas, and
   a focusing optics that focuses a laser beam from an outside of the high-altitude airship at a target.

2. The laser defense system according to claim 1, wherein the focusing optics includes a mirror, the mirror being made of a plate deformed by gravity.

3. The laser defense system according to claim 2, wherein a back surface of the mirror is supported by a plurality of adjustable pillars.

4. The laser defense system according to any one of claims 1 to 3, further comprising a space-based laser that stays in a geostationary Earth orbit, and outputs the laser beam to the high-altitude airship.

5. The laser defense system according to claim 4, wherein the space-based laser is a pulsed chemical laser using at least one gas, the gas staying in the pulsed chemical laser during a laser oscillation.

6. The laser defense system according to claim 5, wherein the pulsed chemical laser is a pulsed COIL, a COL, or an HF chemical laser.

7. The laser defense system according to claim 5 or 6, further comprising a chamber that is located between a laser cavity of the pulsed chemical laser and an outside space, and
   a valve that is located between the chamber and the outside space, and opens after the laser oscillation.

8. The laser defense system according to any one of claims 5 to 7, further comprising a cryosorption vacuum pump that absorbs the gas.

9. The laser defense system according to any one of claims 1 to 8, wherein the high-altitude airship includes a plurality of photo detectors that detect the laser beam from the outside of the HAA.

10. The laser defense system according to any one of claims 1 to 9, further comprising an unmanned vessel that searches for a submarine launching the target,
   wherein the high-altitude airship is controlled based on a signal from the unmanned vessel.

11. A high- altitude airship, comprising;
   a balloon filled with a lifting gas, and
   a focusing optics that focuses a laser beam from an outside of the high-altitude airship at a target.

EP 3 239 647 A2

Fig. 1

Fig. 2

EP 3 239 647 A2

| | | | | |
|---|---|---|---|---|
| Expanded beam diameter at the SBL [m] | 3.0 | 4.0 | 6.0 | 8.0 |
| Beam diameter at the HAA [m] | 20.1 | 15.1 | 10.0 | 7.5 |
| Spot diameter at 100km distance [cm] | 0.8 | 1.1 | 1.7 | 2.2 |
| Spot diameter at 200km distance [cm] | 1.7 | 2.2 | 3.3 | 4.4 |
| Spot diameter at 300km distance [cm] | 2.5 | 3.3 | 5.0 | 6.7 |
| Spot diameter at 500km distance [cm] | 4.2 | 5.6 | 8.3 | 11.1 |
| Spot diameter at 1000km distance [cm] | 8.3 | 11.1 | 16.7 | 22.2 |

Fig. 3

EP 3 239 647 A2

Fig. 4

<u>108</u>

108a

SIDE VIEW

120b

121

120a

BOTTOM VIEW

<u>108</u>

120c

108a

121

120b

120a

120d

F i g.  5

Fig. 6

L3  202

L2

201

Fig. 7

301

L2

L3  303

302

Fig. 8

600

GA 602a 603 601 602c Pump

GB 602b

Fig. 9

700

GA 702a 703 701 702c Pump

GB 702b

Fig. 10

700

GA    702a    703    701    702c

Fig. 11

702b

GB

700

GA    702a    703    701    702c    Pump

702b

GB

Fig. 12

Fig. 13

EP 3 239 647 A2

F i g . 1 4

Fig. 15

Fig. 16

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIM F. RIKER.** An Overview of the Space-based Laser (SBL) Program. *Proceedings of SPIE,* 2002, vol. 4632, 181-186
- Harnessing Light: Laser/Satellite Relay Mirror Systems and Deterrence in 2035. **MICHAEL J. STEPHENS.** Air War College. Air University, 2010
- **CHARLES B. STEVENS.** Alpha: the first space-based defense. *EIR,* 11 March 1988, vol. 15 (11
- **LEWIS JAMISON et al.** High-Altitude Airships for the Future Force Army. RAND Corporation, 2005
- **K. TAKEHISA.** Considerations of a ship defense with a pulsed COIL. *Proceedings of SPIE,* 2015, vol. 9650, 965003

- **K. TAKEHISA.** Proposal of a defense application for a chemical oxygen laser. *Proceedings of SPIE,* 2015, vol. 9466, 94660W
- **JOHN VETROVEC.** Chemical Oxygen-Iodine Laser with a Cryosorption Vacuum Pump. *Proceedings of SPIE,* 2000, vol. 3931, 60-70
- **XIA LIANG-ZHI et al.** Investigation of Cryosorption Vacuum System and Operation Process for COIL. *Proceedings of SPIE,* 2007, vol. 6346, 634630
- **MINGXIU XU et al.** Chemical oxygen-iodine laser with a cryosorption vacuum with different buffer gases. *Proceedings of SPIE,* 2015, vol. 9255, 925527